# EUROPEAN PATENT APPLICATION

(11) **EP 4 261 124 A1**
(43) Date of publication of application: **18.10.2023**
(21) Application number: 21903159.8
(22) Date of filing: 19.11.2021
(51) Int. Cl.: B64C 29/00, B64D 11/06

(54) **AIRCRAFT**

(30) Priority: 11.12.2020 JP 2020205572
(71) Applicant: Quintuple Air, Inc., Tokyo 107-0052 (JP)
(72) Inventor: KITAMA Shoji, Tokyo 107-0052 (JP)
(74) Representative: Schröer, Gernot H.
(86) International application number: PCT/JP2021/042618
(87) International publication number: WO 2022/124055

(57) **Abstract**

A flight vehicle according to an aspect includes: a cabin in an airframe; and a plurality of seats arranged in the cabin one-by-one in a row along a front-back direction of the airframe. The seats are each arranged in a position shifted from the center of the airframe widthwise and are oriented in a width direction of the airframe.

## Description

### Technical Field

The present invention relates to a flight vehicle, and particularly to a technology for making a cabin compact.

### Background Art

Vertical take-off and landing (VTOL) aircraft are capable of vertical takeoff, hovering, and vertical landing, and do not therefore require runways, unlike fixed-wing aircraft. Tiltrotor aircraft, which are one type of VTOL aircraft, have recently been attracting particular attention because a tiltrotor aircraft is capable of switching between a VTOL mode and a cruising mode by changing rotor angles and has both the vertical lift of a helicopter and the cruising performance of a fixed-wing aircraft. Electrification of such VTOL aircraft has also been advanced in anticipation of future autonomous control (automatic operation), and so-called eVTOL aircraft have actively been developed (refer to Patent Literature 1).

### Related Art List

Patent Literature 1: US 2019/0039712 A1

Summary

### Technical Problem

Note that, in order to reduce motor load during VTOL and improve cruising performance of such an eVTOL aircraft, there have been demands for reducing the airframe weight. One possible approach to the weight reduction may be reducing the cabin weight. In this regard, if a cabin is reduced in size, the cabin weight and therefore the airframe weight can be reduced but the interior comfort for passengers may be lowered. Patent Literature 1 teaches various layouts of seats arranged in cabins of flight vehicles, which still have room for improvement in that relatively large dead spaces are present for little room for comfort. Such a problem is not limited to eVTOL aircraft but can similarly be present in flight vehicles with seats arranged in a cabin.

The present invention has been achieved on the basis of recognition of the aforementioned problems, and a chief object thereof is to provide a flight vehicle capable of achieving both reduced airframe weight and interior comfort for passengers.

### Solution to problem

A flight vehicle according to an aspect of the present invention includes: a cabin in an airframe; and a plurality of seats arranged in the cabin one-by-one in a row along a front-back direction of the airframe. The seats are each arranged in a position shifted (offset) from the center of the airframe widthwise and are oriented in the width direction of the airframe.

A flight vehicle according to another aspect of the present invention is a vertical take-off and landing aircraft, and includes a cabin including a seat space containing two seats oriented in a front-back direction of an airframe. One of two seats next to each other in a width direction of the airframe is oriented forward and the other of the two seats is oriented backward.

### Advantageous Effects of Invention

According to the present invention, a flight vehicle capable of achieving both reduced airframe weight and interior comfort for passengers can be provided.

### Brief Description of Drawings

FIG. 1 is a perspective view illustrating an external appearance of a flight vehicle according to an embodiment.
FIGS. 2A and 2B illustrate a configuration of a VTOL aircraft.
FIGS. 3A and 3B illustrate a configuration of the VTOL aircraft.
FIGS. 4A and 4B illustrate a configuration of the VTOL aircraft.
FIGS. 5A and 5B are diagrams schematically illustrating the structures of a rotor unit and around the rotor unit.
FIG. 6 is a block diagram schematically illustrating an electrical configuration of the VTOL aircraft.
FIGS. 7A to 7D are diagrams illustrating control on switching from a VTOL mode to a cruising mode.
FIG. 8 is a perspective view illustrating an arrangement of seats in a VTOL aircraft.
FIGS. 9A and 9B illustrate an arrangement of seats in a cabin.
FIGS. 10A and 10B are plan views illustrating an arrangement of seats and surroundings thereof.
FIGS. 11A and 11B are plan views illustrating an arrangement of seats in an airframe.
FIGS. 12A to 12C illustrate necessary areas of seat spaces depending on seat arrangements.
FIGS. 13A to 13C illustrate seat arrangements according to modifications.
FIGS. 14A to 14C illustrate seat arrangements according to other modifications.
FIGS. 15A to 15C illustrate seat arrangements according to still other modifications.
FIGS. 16A to 16D illustrate seat arrangements according to still other modifications.

### Description of Embodiments

An embodiment of the present invention will now be described in detail with reference to the drawings. In the following embodiments and modifications thereof, components that are substantially the same will be designated by the same reference numerals and redundant description thereof may be omitted as appropriate.

In this embodiment, a flight vehicle is exemplified by an electric VTOL aircraft (eVTOL aircraft). In the VTOL aircraft, a way of arrangement of seats is devised to make the seat area smaller, and the cabin shape is defined to surround the seat area with no wasted space. As a result, reduction in the size of the cabin and therefore reduction in the size and the weight of the airframe are achieved. Details thereof will be described hereinafter.

An overall structure of the flight vehicle will first be described.

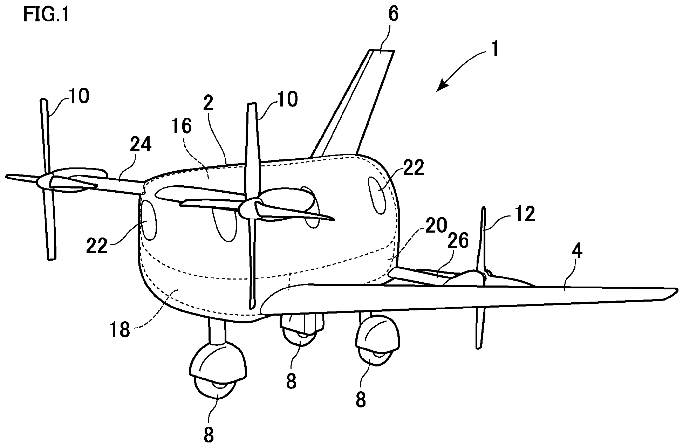

FIG. 1 is a perspective view illustrating an external appearance of the flight vehicle according to the embodiment.
The VTOL aircraft 1 includes a fuselage 2 at a central part of the airframe, main wings 4 on the right and the left of the fuselage 2, a vertical tail wing 6 on a rear part of the fuselage 2, and a plurality of wheels 8 provided to extend downward from the fuselage 2. The VTOL aircraft 1 also includes a pair of left and right front rotors 10 on the front part of the airframe, and a pair of left and right rear rotors 12 on the rear part thereof.

In the embodiment, the VTOL aircraft 1 is an automatically operated aircraft (automatically controlled aircraft) without a cockpit, and includes a cabin 16 inside the fuselage 2. Passengers, which are objects to be transported, get in the cabin 16. Underneath the cabin 16, an equipment room 18 for accommodating electronic devices and the like, a machine room 20 for accommodating other equipment, and the like are located. A plurality of windows 22 are arranged on a front face and side faces of the fuselage 2 to enable viewing of the outside from the cabin 16.

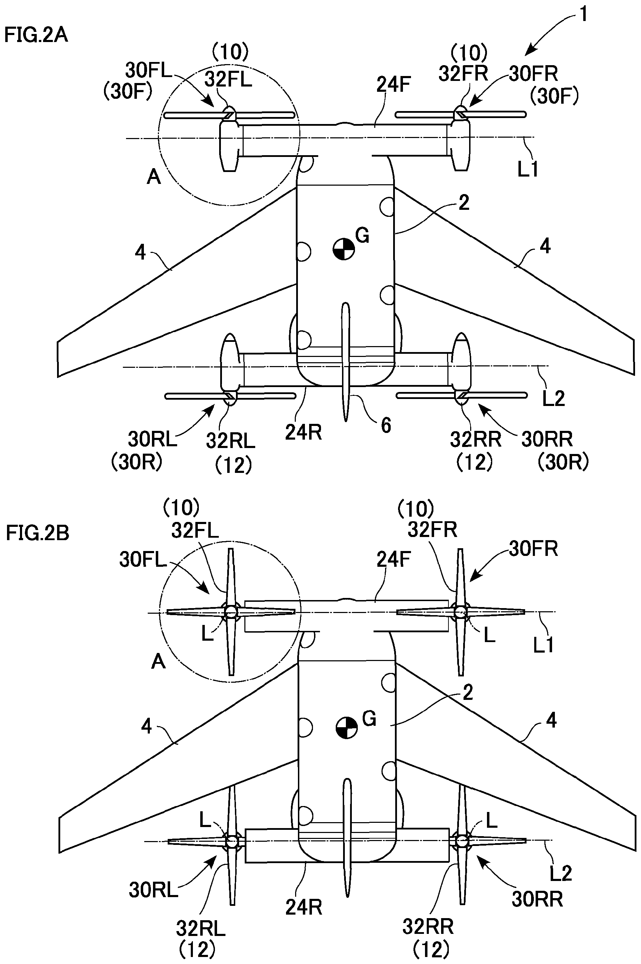

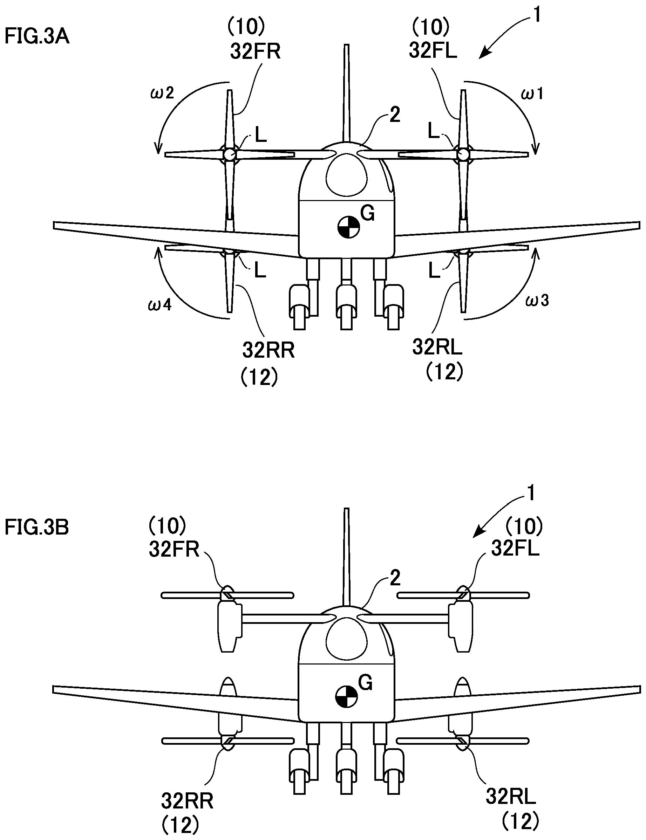

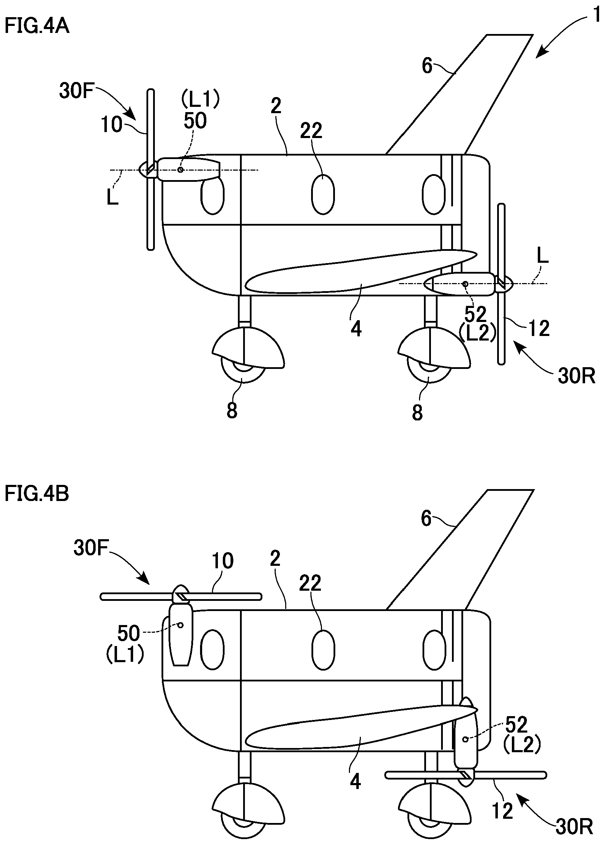

FIGS. 2A to 4B illustrate a structure of the VTOL aircraft 1. FIGS. 2A and 2B are plan views, FIGS. 3A and 3B are front views, and FIGS. 4A and 4B are side views. FIGS. 2A, 3A, and 4A illustrate cruising states, and FIGS. 2B, 3B, and 4B illustrate VTOL states. Note that, in the following description, relative positions in the front-back direction, the lateral direction, and the vertical direction, and the rotating directions of rotors will be expressed with respect to the axial direction of the VTOL aircraft 1.

As illustrated in FIG. 2A, a pair of main wings 4 extend from the left and right side faces of the fuselage 2. The main wings 4 each have an airfoil cross section, and generate lift during cruising of the VTOL aircraft 1. In the embodiment, the main wings 4 are swept-back wings that sweep back toward wing ends, which reduces drag while the VTOL aircraft 1 flies at a high speed and improves stability. A front rod 24F extending horizontally in the lateral direction is provided on an upper part of a front end of the fuselage 2. In addition, a rear rod 24R extending horizontally in the lateral direction is provided on a lower part of a rear end of the fuselage 2.

A rotor unit 30FL is provided at a left end of the front rod 24F, and a rotor unit 30FR is provided at a right end thereof. The rotor unit 30FL includes a rotor 32FL, and the rotor unit 30FR includes a rotor 32FR. The rotors 32FL and 32FR function as the front rotors 10.

A rotor unit 30RL is provided at a left end of the rear rod 24R, and a rotor unit 30RR is provided at a right end thereof. The rotor unit 30RL includes a rotor 32RL, and the rotor unit 30RR includes a rotor 32RR. The rotors 32RL and 32RR function as the rear rotors 12.

The rotors each have a relatively large rotation surface so as to produce sufficient thrust during rotation. In the embodiment, the rotors are designed so that the diameters of the rotation surfaces are equal to or larger than the width of the fuselage 2. In order to reduce the weight of the VTOL aircraft 1, however, the respective rotor units 30 include no ducts (protective shields) surrounding the rotors.

The rotor 32FL and the rotor 32RL are arranged to be coaxial during cruising and so that projection representations of the rotor 32FL and the rotor 32RL in the front-back direction do not reach the fuselage 2. Similarly, the rotor 32FR and the rotor 32RR are also arranged to be coaxial during cruising and so that projection representations of the rotor 32FR and the rotor 32RR in the front-back direction do not reach the fuselage 2.

Hereinafter, the rotor units 30FL and 30FR will be collectively referred to as "front rotor units 30F" when the rotor units 30FL and 30FR are not particularly distinguished from each other. The rotor units 30RL and 30RR will be collectively referred to as "rear rotor units 30R" when the rotor units 30RL and 30RR are not particularly distinguished from each other. The rotor units 30FL, 30FR, 30RL, and 30RR will be collectively referred to as "rotor units 30" when the rotor units 30FL, 30FR, 30RL, and 30RR are not particularly distinguished from each other. The rotors 32FL, 32FR, 32RL, and 32RR will be collectively referred to as "rotors 32" when the rotors 32FL, 32FR, 32RL, and 32RR are not particularly distinguished from each other.

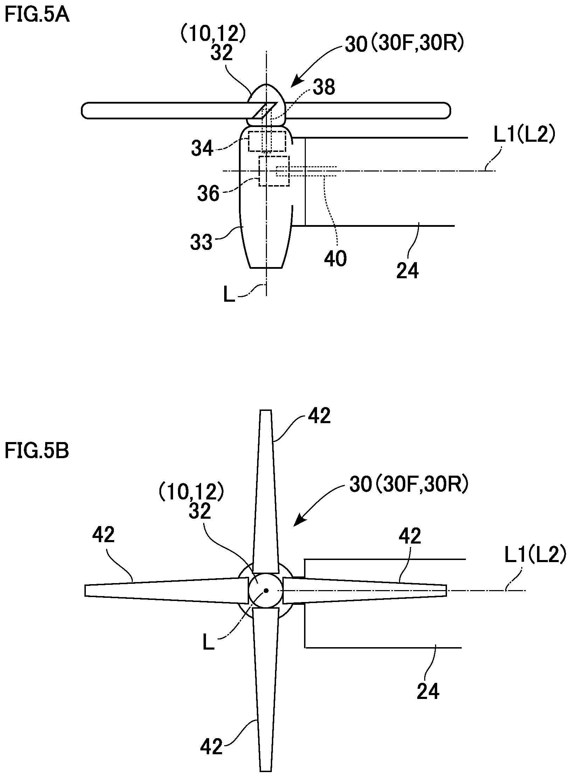

FIGS. 5A and 5B are diagrams schematically illustrating the structures of a rotor unit and around the rotor unit. FIG. 5A corresponds to an enlarged view of part A in FIG. 2A, and FIG. 5B corresponds to an enlarged view of part A in FIG. 2B.
As illustrated in FIG. 5A, each rotor unit 30 includes a first motor 34 and a second motor 36 in a hollow body 33. The rotor 32 is rotatably supported on one end of body 33. The first motor 34 is connected with a rotating shaft 38 of the rotor 32. When the first motor 34 is driven, the rotor 32 rotates about the axis L of the rotating shaft 38. The second motor 36 is connected with a central shaft 40, which extends from the rod 24, via a reduction gear or the like, which is not illustrated.

As also illustrated in FIG. 5B, when the second motor 36 is driven, the rotor unit 30 itself turns about the axis (axis L1 or L2, which will be described later) of the central shaft 40. The axes L1 and L2 are horizontal axes. A mechanism for turning a front rotor unit 30F (thus, a front rotor 10) about the axis L1 corresponds to a "front deflection mechanism". A mechanism for turning a rear rotor unit 30R (thus, a rear rotor 12) about the axis L2 corresponds to a "rear deflection mechanism". The rotor 32 includes a plurality of blades 42 extending radially from the center thereof. When the rotor 32 rotates, the blades 42 form a rotation surface. While four equidistant blades 42 are arranged in the embodiment, the number of blades 42 may be set as appropriate.

The description refers back to FIGS. 2A and 2B, in which the rotor unit 30FL and the rotor unit 30FR are turnable (variable) within a range of 90 degrees with a center at the axis L1 of the front rod 24F. Thus, the front rotor units 30F each continuously turn between a cruising angle (FIG. 2A) at which the front rotor 10 is directed forward and a VTOL angle (FIG. 2B) at which the front rotor 10 is directed upward.

In contrast, the rotor unit 30RL and rotor unit 30RR are each turnable within a range of 90 degrees with a center at the axis L2 of the rear rod 24R. Thus, the rear rotor units 30R each continuously turn between a cruising angle (FIG. 2A) at which the rear rotor 12 is directed rearward and a VTOL angle (FIG. 2B) at which the rear rotor 12 is directed downward.

As illustrated in FIG. 2A, the VTOL aircraft 1 has a point-symmetric structure with respect to the center of the fuselage 2 in planar view. The main wings 4 are swept-back wings, the widths thereof become smaller toward the wing ends thereof, and base ends of the main wings 4 are located slightly closer to the front than the center of the fuselage 2 is located. Thus, the weights of the pair of main wings 4 balance with each other near the center of the fuselage 2. According to such a structure, the center of gravity G of the VTOL aircraft 1 is at the center of the fuselage 2 in planar view, which facilitates the balancing. In addition, because the main wings 4 are significantly large relative to the fuselage 2, the lift can be easily maintained during cruising. Consequently, there is also an advantage in that the rotor outputs can be saved.

As illustrated in FIG. 2B, during VTOL, the arrangement is such that the axes L of the four rotors 32 are located at four vertices of a substantially square shape in planar view. The center of gravity G is at the center of the square. As a result, the VTOL aircraft 1 can easily maintain balance during VTOL.

As illustrated in FIG. 3A, in the cruising mode, the axes L of the front rotors 10 are located at a height that is substantially equal to the height of an upper end of the fuselage 2. In contrast, the axes L of the rear rotors 12 are located at a height that is substantially equal to the height of a lower end of the fuselage 2. The pair of main wings 4 extend leftward and rightward from side faces of a lower part of the fuselage 2. According to such a structure, the center of gravity G of the VTOL aircraft 1 is slightly lower than the center of the fuselage 2. As a result, it is easy to stably maintain the balance between the lift and the gravity acting during cruising of the VTOL aircraft 1.

Regarding the front rotors 10, the rotor 32FL rotates counterclockwise, and the rotor 32FR rotates clockwise. Regarding the rear rotors 12, the rotor 32RL rotates clockwise, and the rotor 32RR rotates counterclockwise. As a result of setting the four rotors 32 so that left and right rotors rotate in directions opposite from each other and that front and rear rotors rotate in directions opposite from each other, counter torque acting on the VTOL aircraft 1 is cancelled out, which ensures the stability during cruising.

Attitude control of the VTOL aircraft 1 in the cruising mode is performed as follows.
For changing a pitch attitude, control described in Table 1 is performed.

**[Table 1]**

| | NOSE DOWN | NOSE UP |
|---|---|---|
| ROTOR 32FL ROTATING SPEED [ω1] | HIGH | LOW |
| ROTOR 32FR ROTATING SPEED [ω2] | HIGH | LOW |
| ROTOR 32RL ROTATING SPEED [ω3] | LOW | HIGH |
| ROTOR 32RR ROTATING SPEED [ω4] | LOW | HIGH |

In the embodiment, because the center of gravity G of the VTOL aircraft 1 is slightly lower than the center of the fuselage 2, the pitching moment in a forward inclination direction (a nose lowering direction) of the airframe and the pitching moment in a rearward inclination direction (a nose lifting direction) balance out when the rotating speed of the rotors 32FL and 32FR is lower than the rotating speed of the rotors 32RL and 32RR. The rotor rotating speeds at which the pitching moments in the forward inclination direction and in the rearward inclination direction balance out are set as reference rotating speeds (corresponding to "balanced rotating speeds").

The reference rotating speeds are set individually for the front rotors 10 (rotors 32FL and 32FR) and the rear rotors 12 (rotors 32RL and 32RR). The reference rotating speed of the front rotors 10 will also be referred to as a "front reference rotating speed", and the reference rotating speed of the rear rotors 12 will also be referred to as a "rear reference rotating speed". The reference rotating speeds may be preset depending on the cruising speed of the VTOL aircraft 1. As the cruising speed becomes higher, the reference rotating speeds becomes higher.

For example, in a case of an airframe with pitching moments balancing out when the speed of the rotors 32FL and 32FR is one fifth the speed of the rotors 32RL and 32RR, when the rotating speed of the rotors 32RL and 32RR is 2500 rpm, the pitching moments balance out with the rotors 32FL and 32FR rotating at 500 rpm. In this case, 500 rpm is the reference rotating speed (front reference rotating speed) of the rotors 32FL and 32FR, and 2500 rpm is the reference rotating speed (rear reference rotating speed) of the rotors 32RL and 32RR. In this manner, the reference rotating speed of the rotors 32FL and 32FR is changed depending on the rotating speed of the rotors 32RL and 32RR, and the reference rotating speed of the rotors 32RL and 32RR is changed depending on the rotating speed of the rotors 32FL and 32FR.

Thus, as shown in Table 1, for changing the rotating speeds to lower the nose of the airframe, control is performed to make the rotating speed of the rotors 32FL and 32FR higher than the reference rotating speed of the rotors 32FL and 32FR or make the rotating speed of the rotors 32RL and 32RR lower than the reference rotating speed of the rotors 32RL and 32RR. Alternatively, control may be performed to make the rotating speed of the rotors 32FL and 32FR higher than the reference rotating speed of the rotors 32FL and 32FR and make the rotating speed of the rotors 32RL and 32RR lower than the reference rotating speed of the rotors 32RL and 32RR.

Conversely, for changing the rotating speeds to lift the nose of the airframe, control is performed to make the rotating speed of the rotors 32FL and 32FR lower than the reference rotating speed of the rotors 32FL and 32FR or make the rotating speed of the rotors 32RL and 32RR higher than the reference rotating speed of the rotors 32RL and 32RR. Alternatively, control may be performed to make the rotating speed of the rotors 32FL and 32FR lower than the reference rotating speed of the rotors 32FL and 32FR and make the rotating speed of the rotors 32RL and 32RR higher than the reference rotating speed of the rotors 32RL and 32RR.

For changing a yaw attitude, control as shown in Table 2 is performed.

**[Table 2]**

| | NOSE RIGHT | NOSE LEFT |
|---|---|---|
| ROTOR 32FL ROTATING SPEED [ω1] | HIGH | LOW |
| ROTOR 32FR ROTATING SPEED [ω2] | LOW | HIGH |
| ROTOR 32RL ROTATING SPEED [ω3] | HIGH | LOW |
| ROTOR 32RR ROTATING SPEED [ω4] | LOW | HIGH |

Specifically, for changing the nose to face rightward, control is performed to make the rotating speed of the rotors 32FL and 32RL higher than the rotating speed of the rotors 32FR and 32RR. Conversely, for changing the nose to face leftward, control is performed to make the rotating speed of the rotors 32FL and 32RL lower than the rotating speed of the rotors 32FR and 32RR.

For changing a roll attitude, control as shown in Table 3 is performed.

**[Table 3]**

| | LEANING TO RIGHT | LEANING TO LEFT |
|---|---|---|
| ROTOR 32FL ROTATING SPEED [ω1] | HIGH | LOW |
| ROTOR 32FR ROTATING SPEED [ω2] | LOW | HIGH |
| ROTOR 32RL ROTATING SPEED [ω3] | LOW | HIGH |
| ROTOR 32RR ROTATING SPEED [ω4] | HIGH | LOW |

Specifically, for changing the roll attitude in a direction in which the airframe leans to the right, control is performed to make the rotating speed of the rotors 32FL and 32RR higher than the rotating speed of the rotors 32FR and 32RL. Conversely, for changing the roll attitude in a direction in which the airframe leans to the left, control is performed to make the rotating speed of the rotors 32FL and 32RR lower than the rotating speed of the rotors 32FR and 32RL.

As described above, according to the embodiment, the attitude of VTOL aircraft 1 can be controlled only by changing the rotating speeds of the four rotors 32FL, 32RL, 32FR, and 32RR. Specifically, although the VTOL aircraft 1 does not have control surfaces like those of fixed-wing aircraft, any attitude control can be performed by controlling the rotating speeds of the four rotors because the heights of the front rotors 10 are different from the height of the rear rotors 12 during cruising.

As illustrated in FIG. 3B, in the VTOL mode, the front rotors 10 are directed upward and the rear rotors 12 are directed downward, but the thrusts of all the rotors 32 are upward. The VTOL operation is controlled while the balance between the thrusts of the four rotors 32 and the gravity of the VTOL aircraft 1 is adjusted.

As illustrated in FIGS. 4A and 4B, pivot shafts (turning shafts) 50 of the front rotor units 30F are along the axis L1, and pivot shafts 52 of the rear rotor units 30R are along the axis L2. The pivot shafts 50 are at positions higher than the pivot shafts 52. In addition, during cruising, the axes L of the front rotors 10 are parallel to the axes L of the rear rotors 12, and the axes L of the front rotors 10 are at positions higher than the axes L of the rear rotors 12. Furthermore, the front rotors 10 and the rear rotors 12 do not overlap with the fuselage 2 in side view in either of the cruising mode and the VTOL mode.

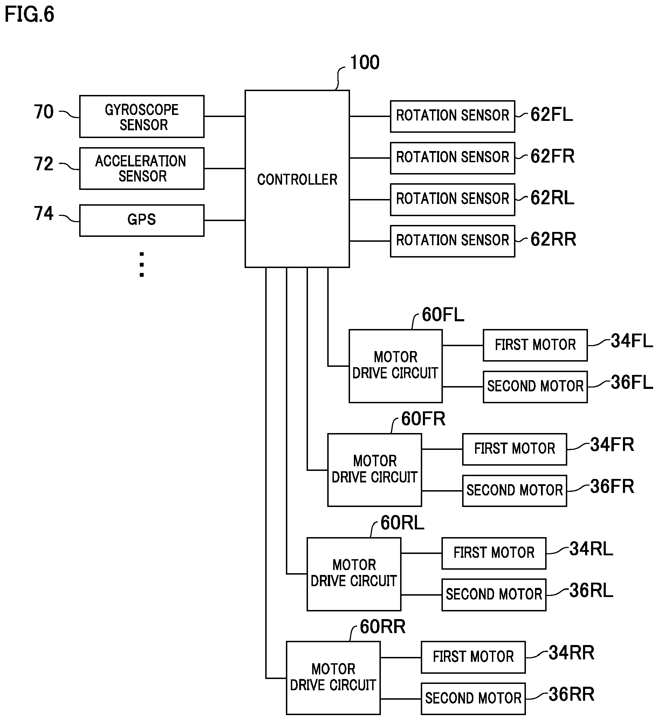

FIG. 6 is a block diagram schematically illustrating an electrical configuration of the VTOL aircraft 1.
A control system of the VTOL aircraft 1 includes a controller 100 as a main component. The controller 100 is a microcomputer that includes processors such as CPUs for executing various computing processes, a ROM storing control programs and the like, a RAM used as a work area for storing data and executing programs, a nonvolatile memory that holds stored contents even after power shutdown, an input/output interface, and the like. The controller 100 is installed in the equipment room 18 (see FIG. 1) in the fuselage 2.

The controller 100 is connected with the rotor units 30 via communication lines, which are not illustrated, and controls driving of the rotor units 30. Each of the rotor units 30 includes, in addition to the first motor 34 and the second motor 36 described above, a motor drive circuit 60 that drives the motors, a rotation sensor 62 for detecting rotation states of the motors, and the like. In FIG. 6, components of the rotor unit 30FL are represented by "FL", components of the rotor unit 30FR are represented by "FR", components of the rotor unit 30RL are represented by "RL", and components of the rotor unit 30RR are represented by "RR". Note that the rotor units 30 each include a battery, which is not illustrated, for power supply to the motor drive circuit 60.

The controller 100 outputs control signals to the individual motor drive circuits 60 in accordance with control programs to control the rotations of the individual first motors 34 and the individual second motors 36. The front deflection mechanism is controlled by driving of the second motors 36 of the front rotor units 30F, and the rear deflection mechanism is controlled by driving of the second motors 36 of the rear rotor units 30R. In this manner, switching between the cruising mode and the VTOL mode is performed. The rotating speeds of the individual first motors 34 are adjusted to control the cruising speed of the VTOL aircraft 1 and perform pitch control, yaw control, and roll control.

The rotation sensors 62 output signals indicating the rotating directions and the number of rotations of the second motors 36. The controller 100 receives these signals and determines the attitudes of the individual rotors 32 (that is, determines whether the VTOL aircraft 1 is in a cruising state or in a VTOL state). The rotation sensors 62 output signals indicating the rotating speeds of the first motors 34. The controller 100 receives these signals and determines whether or not the rotating speeds of the individual rotors 32 have reached control target values.

The VTOL aircraft 1 further have mounted thereon various sensors such as a gyroscope sensor 70 and an acceleration sensor 72 and communication devices such as a GPS receiver 74, and detection signals and received signals from the sensors and the devices are input to the controller 100. The controller 100 can determine the attitude of the airframe on the basis of detection signals from the gyroscope sensor 70 and the acceleration sensor 72. The controller 100 can determine a current navigation position on the basis of signals received by the GPS receiver 74.

Next, changes in the state of the VTOL aircraft 1 caused by transition of the operation mode will be explained.

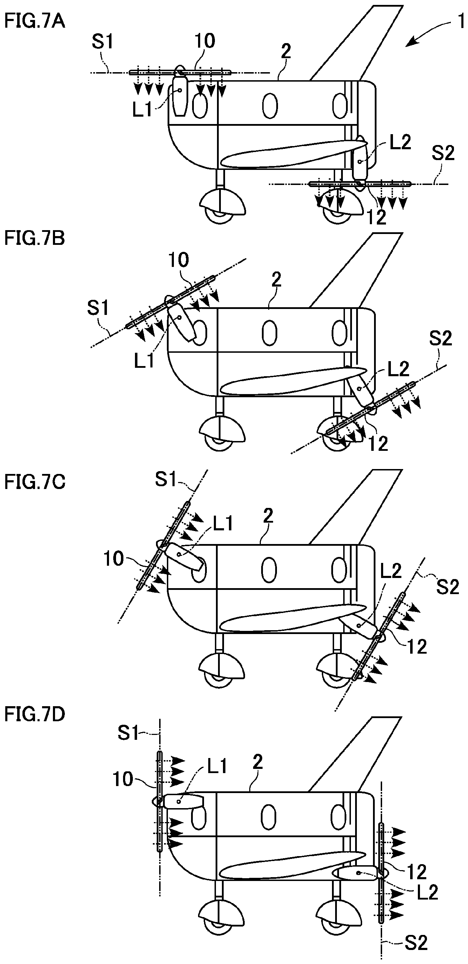

FIGS. 7A to 7D are diagrams illustrating control on switching from the VTOL mode to the cruising mode. FIGS. 7A to 7D illustrate processes of the control. Arrows in FIGS. 7A to 7D represent airflows passing through the rotors 32.

In the VTOL mode, the front rotors 10 are directed upward, the rear rotors 12 are directed downward, and airflows through all of the front and rear rotors 10 and 12 are directed downward to generate upward thrust. During takeoff, the thrust is larger than the gravity, which enables the VTOL aircraft 1 to ascend (FIG. 7A). At this point, the rotation plane S1 of the front rotors 10 is at a position higher than the upper face of the fuselage 2. The rotation plane S2 of the rear rotors 12 is at a position lower than the lower face of the fuselage 2.

When the VTOL aircraft 1 reaches a predetermined altitude, the front rotors 10 and the rear rotors 12 turn in synchronization with each other, and the operation mode switches to the cruising mode (FIGS. 7B and 7C). In this process, the front rotors 10 tilt from upward to forward positions with respect to the fuselage 2 about the axis L1, and the rotation plane S1 is always located outside the fuselage 2. The rear rotors 12 tilt from downward to rearward positions with respect to the fuselage 2 about the axis L2, and the rotation plane S2 is always located outside the fuselage 2.

When the respective rotors turn 90 degrees in this manner, the front rotors 10 are directed forward and the rear rotors 12 are directed rearward, and airflows through all of the front and rear rotors 10 and 12 are directed rearward to generate forward thrust (FIG. 7D). Thus, the operation mode switches to the cruising mode. In this process, the rotation plane S1 of the front rotors 10 is located ahead of a front face of the fuselage 2. The rotation plane S2 of the rear rotors 12 is located behind a rear face of the fuselage 2.

Conversely, the process of switching from the cruising mode to the VTOL mode goes through changes from FIG. 7D back to FIG. 7A. During landing, the thrust of the front rotors 10 and the rear rotors 12 is smaller than the gravity, which enables the VTOL aircraft 1 to descend (FIG. 7A).

As described above, in the embodiment, the positions of the front rotors 10 and the rear rotors 12 relative to the airframe and the turning directions of the rotors are set so that the rotation planes S1 and S2 of the rotors do not pass across the fuselage 2 when the rotors are turned for transition of the operation mode. Thus, even if a foreign material interferes with any of the rotors, it is possible to prevent or reduce damage to the fuselage 2. As a result, not only the safety of passengers but also instruments and the like mounted in the fuselage 2 can be protected.

Next an arrangement of seats for reducing the size of the VTOL aircraft 1 will be explained.

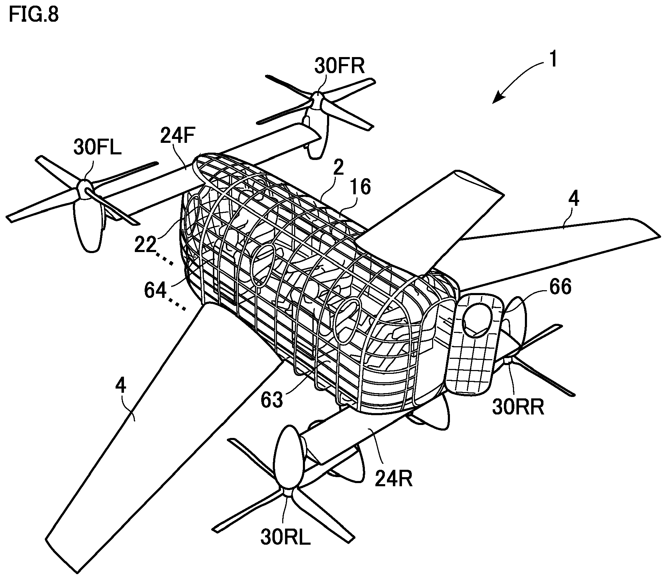

FIG. 8 is a perspective view illustrating an arrangement of seats in the VTOL aircraft 1. FIG. 8 illustrates the VTOL aircraft 1 as viewed from obliquely above (from a left rear side of) the VTOL aircraft 1. For convenience of explanation, the fuselage 2 is illustrated in a transparent manner so that the inside of the cabin 16 can be seen.

In the VTOL aircraft 1, a floor surface 63 of the cabin 16 has a substantially rectangular shape, on which a plurality of seats 64 (five seats in the embodiment) are arranged so that up to five passengers can be on board. The fuselage 2 has an upper part having a curved surface with an arc-shaped cross section so as to increase aerodynamic performance, and has a streamline shape as a whole except for a relatively flat rear wall. The corners of the fuselage 2 are rounded to lower aerodynamic drag.

The main wings 4 are located at a lower part of the cabin 16, which improves the comfort for passengers M. In addition, a door 66 is provided in a wall at the back of the cabin 16. The rear rod 24R extends in the lateral direction substantially immediately below the door 66. As illustrated, passengers can get into the cabin 16 one by one by stooping through the door 66 in an open state.

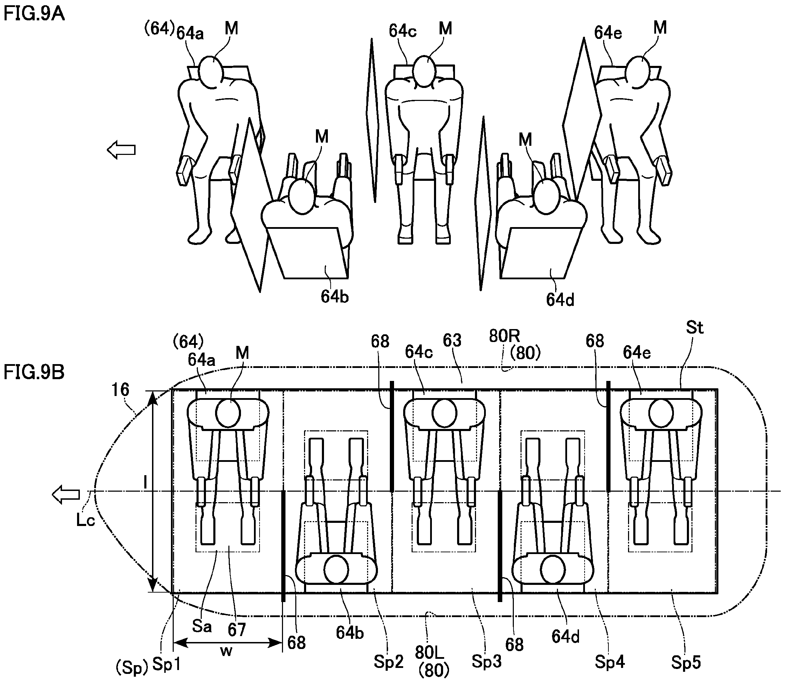

FIGS. 9A and 9B illustrate an arrangement of the seats 64 in the cabin 16. FIG. 9A is a perspective view, and FIG. 9B is a plan view. In FIGS. 9A and 9B, a white arrow indicates a forward direction of the airframe.
A plurality of seats 64a to 64e (simply referred to as "seats 64" when the seats are not particularly distinguished from each other") are arranged next to each other in a row in such a manner that adjacent seats are diagonally opposite each other. The direction of the row corresponds to the front-back direction of the cabin 16 (that is, the front-back direction of the airframe).

Specifically, the seats 64a to 64e are arranged one by one along the front-back direction of the airframe. Each of the seats 64a to 64e is in a position shifted (offset) from the center Lc of the airframe widthwise. The seats 64 are oriented in the width direction of the airframe. Note that "the width direction of the airframe" means a direction perpendicular to the axial direction (i.e., the front-back direction of the airframe) on a horizontal plane. In the embodiment, "the width direction of the airframe" corresponds to a wing width direction. The "wing width direction" refers to the longitudinal direction of the main wings 4, but is not limited thereto. The "wing width direction" may refer to the longitudinal direction of the main wings 4 as viewed from the front of the airframe. Needless to say, the "seat orientation" refers to the orientation of the front of a seat.

More specifically, the seats 64a to 64e are alternately shifted in the width direction of the airframe from the center Lc widthwise from the front to the back of the airframe. In other words, the seats 64 are arranged in a staggered (zigzag) manner from the front to the back of the cabin 16. Odd-numbered seats 64a, 64c, and 64e in this order from the front of the cabin 16 face leftward, and even-numbered seats 64b and 64d face rightward.

The cabin 16 has inner wall faces 80 (a left wall face 80L and a right wall face 80R) facing each other in the width direction of the airframe. Each of the seats 64 has a back 65 adjacent to an inner wall face on the side toward which the seat 64 is shifted from the center Lc widthwise. Specifically, the backs 65 of the odd-numbered seats 64a, 64c, and 64e in this order from the front are adjacent to the right wall face 80R, and the backs 65 of the even-numbered seats 64b and 64d are adjacent to the left wall face 80L. In other words, the shape of the cabin 16 is thus defined.

Individual spaces Sp1 to Sp5 for passengers M are secured for the respective seats 64 on the floor surface 63 of the cabin 16. Hereinafter, the individual spaces Sp1 to Sp5 will be collectively referred to as "individual spaces Sp" when the individual spaces are not particularly distinguished from each other. Each of the individual spaces Sp has a rectangular shape and is set to a size that ensures the comfort for a passenger M seated on the seat 64. This size is such a size with which a passenger M is less likely to be spatially stressed. In other words, a size that is necessary and sufficient for reducing the stress on and ensuring the comfort for a passenger M is set for each individual space Sp.

Specifically, when a passenger M is seated on a seat 64, the width occupied by the passenger M is largest at the shoulder position and becomes smaller toward the feet. Thus, the individual spaces Sp each have a width w obtained by adding a margin to the shoulder width of a typical adult male. The individual spaces Sp each have a length l set to a value at which one baggage can be put in front of the feet of a typical adult male seated on the seat 64.

The individual spaces Sp are set to be continuous in a row from the front to the back of the cabin 16 and have a center line in the longitudinal direction corresponding to the widthwise center Lc. The individual spaces Sp each include a floor surface 67 corresponding to a foot space Sa for a passenger M on a side opposite the side toward which the seat 64 is shifted from the center Lc widthwise.

A partition 68 is provided between adjacent individual spaces Sp. The partition 68 may be an acrylic board or the like, and has a vertical dimension that is higher than the top of the head of a typical adult male seated on the seat 64. The partition 68 has a lateral dimension that is about 1/2 the individual space Sp. In the illustrated example, the lateral dimension of the partition 68 is such that an edge in the lateral direction reaches the widthwise center Lc.

The partitions 68 are alternately shifted in the width direction of the airframe from the center Lc widthwise from the front to the back of the cabin 16. The partitions 68 each have a base end on one of the inner wall faces 80 facing each other, and protrude toward the other inner wall face 80. The protruding amount is set so that the eyes of passengers M seated normally next to each other, that is, diagonally opposite each other do not meet. This structure reduces the stress of the passengers M during flight of the VTOL aircraft 1.

A seat area St constituted by the plurality of individual spaces Sp has a substantially rectangular shape in planar view, and the inner wall faces 80 of the cabin 16 have a shape complementary to the shape of the seat area St. The "complementary" shape used herein means that the inner wall faces 80 form a shape that closely surrounds the seat area St with little or minimized dead space.

Thus, in the embodiment, the way of arrangement of the seats 64 is devised in this manner to make the seat area St small. The shape of the cabin 16 is defined to surround the seat area St without waste, and as a result, reduction in the size of the cabin 16 and therefore reduction in the size and the weight of the airframe are achieved.

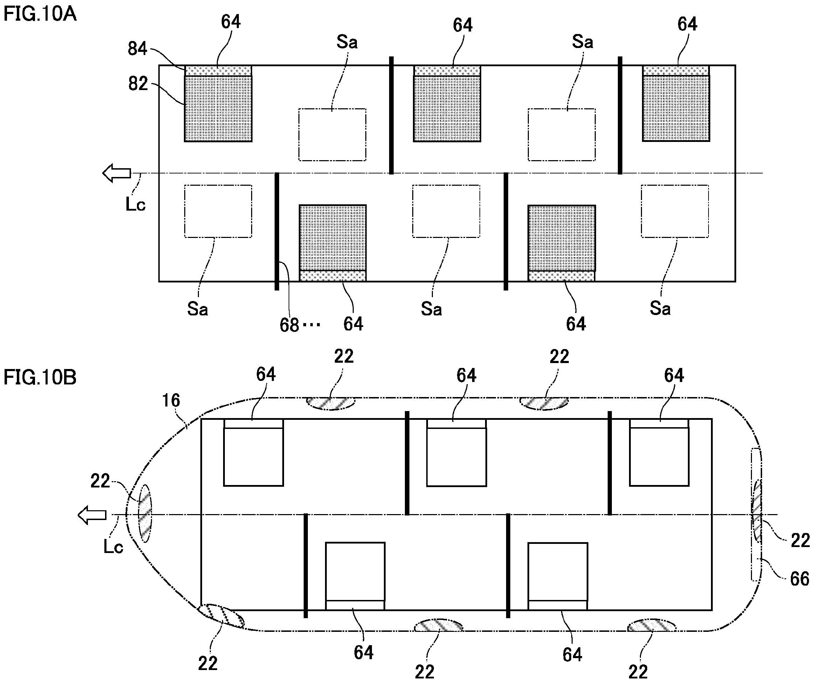

FIGS. 10A and 10B are plan views illustrating an arrangement of the seats 64 and surroundings thereof. FIG. 10A illustrates the seat area, and FIG. 10B illustrates arrangement of windows 22 of the cabin 16.
As illustrated in FIG. 10A, the seats 64 each include a bearing surface 82 and a back 84. The bearing surface 82 is located on one side and the foot space Sa is located on the other side with respect to the widthwise center Lc. A passenger M that has gotten into the cabin 16 from the rear goes toward the front in a zigzag manner across the floor surfaces of the foot spaces Sa and sits on a specified seat 64.

As illustrated in FIG. 10B, in the wall of the cabin 16, the windows 22 are arranged at positions corresponding to the front of the respective seats 64. This is expected to produce relaxing effects for seated passengers M such as enjoying the scenery outside through the windows in front of the respective passengers M. While an example of a structure in which the individual windows 22 are shifted a little toward the front of the airframe rather than just in front of the respective seats 64 has been presented in the embodiment, the windows 22 may be positioned just in front of the seats 64. The windows 22 may be at any positions through which seated passengers M can see the outside in front of them.

A window 22 is also provided in a front wall of the cabin 16. A window 22 is also provided on the door 66 in the back wall of the cabin 16. The windows 22 around the cabin 16 can adequately let outside light into the cabin 16, which alleviates a cooped-up feeling in the cabin 16. The comfort in the cabin 16 can therefore be improved.

Note that, in the embodiment, the windows 22 are provided in the wall of the cabin 16 at positions in front of the respective seats 64, and no windows 22 are provided at positions at the backs of the seats 64. As a result, the windows 22 are arranged in a staggered manner from the front to the back of the cabin 16. In this manner, the number of windows 22 is minimized, which makes it easier to secure the stiffness and the durability of the fuselage 2. In a modification, windows may be provided at positions at the backs of the seats 64.

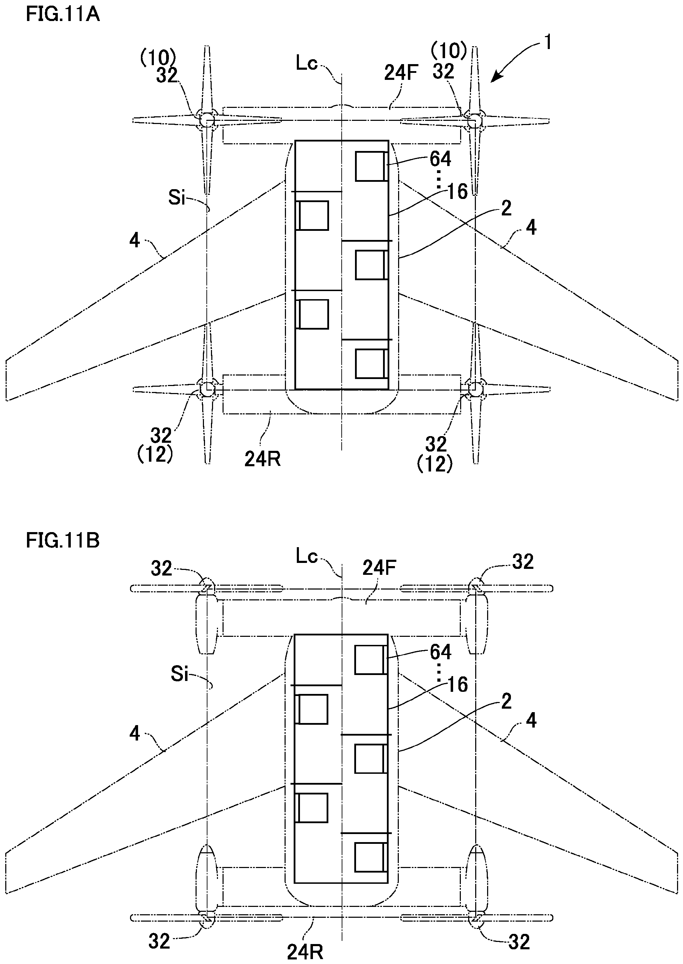

FIGS. 11A and 11B are plan views illustrating an arrangement of the seats 64 in the airframe. FIG. 11A illustrates a VTOL state, and FIG. 11B illustrates a cruising state.
As described above, the four rotors 32 are located at four vertices of a substantially square shape in a planar view. In addition, the structure is designed so that the cabin 16 is inside an inner region Si (a substantially square region surrounded by a one-dot chain line) surrounded by the square shape having the vertices both during VTOL and during cruising.

As a result of arranging the four rotors 32 at vertices of a square shape and arranging the cabin 16 inside the inner region Si of the square shape, the airframe can easily keep weight balance during flight. In addition, as already described, even if a foreign material interferes with any of the rotors 32, it is possible to avoid such a situation in which the foreign material penetrates the cabin 16 and ensure the safety of the passengers M.

Next, advantages of the seat arrangement according to the embodiment will be explained.

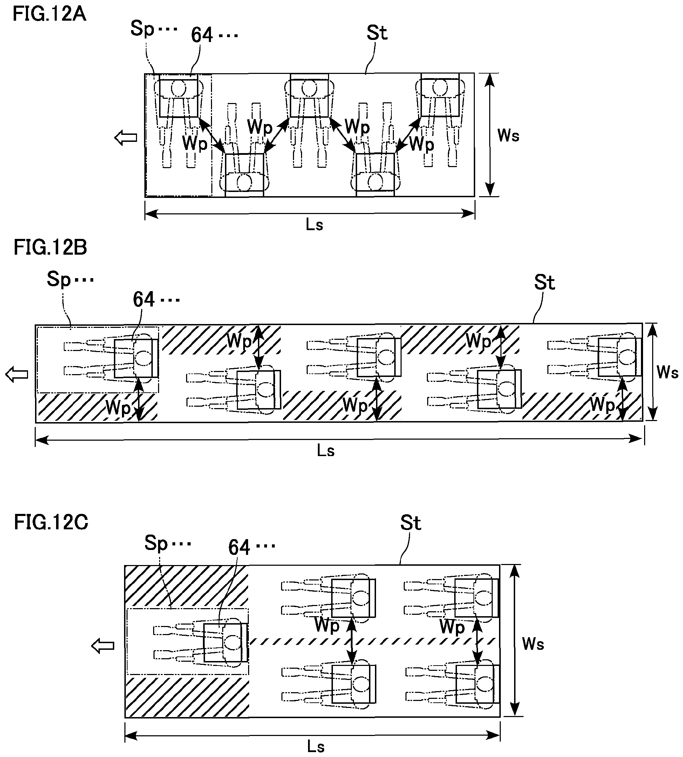

FIGS. 12A to 12C illustrate necessary areas of the seat area depending on seat arrangements. FIG. 12A illustrates the embodiment, FIG. 12B illustrates a first comparative example, and FIG. 12C illustrates a second comparative example. In the first comparative example, the seats 64 are arranged to face forward of the airframe. In the second comparative example, the seats 64 are arranged to face forward of the airframe, and four out of the five seats 64 are arranged in two rows of two seats next to each other.

Here, the area of the seat area St in each of the embodiment and the comparative examples is calculated. Note that, for comparison between these areas, a passage width Wp (a passage width at a position where the passage width is smallest) in the cabin is assumed to be the same in all of the embodiment and the comparative examples. In addition, it is assumed that the individual spaces Sp are secured.

As a result, calculation results shown in Table 4 are obtained.

**[Table 4]**

| SEAT ARRANGEMENT (5 PERSONS) | SEAT AREA LENGTH Ls [m] | SEAT AREA WIDTH Ws [m] | AREA [m²] | AREA DIFFERENCE [m²] |
|---|---|---|---|---|
| EMBODIMENT | 3.75 | 1.40 | 5.25 | - |
| FIRST COMPARATIVE EXAMPLE | 6.96 | 1.12 | 7.79 | +2.54 |
| SECOND COMPARATIVE EXAMPLE | 4.20 | 1.71 | 7.18 | +1.93 |

Note that, as described above, the individual spaces Sp are assumed to be set so that the length Ls of the seat area St is Ls = 3.75 m and the width Ws is Ws = 1.40 m in the embodiment. According to the calculation results in Table 4, the seat area St has an area larger by 2.54 m2 in the first comparative example than in the embodiment, and an area larger by 1.93 m2 in the second comparative example than in the embodiment. Thus, as compared with the embodiment, the areas as hatched in FIGS. 12B and 12C are additionally needed in the respective comparative examples, which is disadvantageous in terms of size reduction. In other words, the advantage of the seat arrangement of the embodiment in terms of reduction in the size of the cabin 16 can be seen.

Note that, when the seat area St is elongated in the front-back direction as in the first comparative example, the resistance of the fuselage 2 against a bending moment is reduced. Thus, the seat arrangement that allows the length to be limited as in the embodiment is preferable.

As described above, in the embodiment, a plurality of seats 64 are arranged one by one next to each other along the front-back direction of the airframe, and each of the seats 64 is shifted from the center Lc of the airframe widthwise and is oriented in the width direction of the airframe. As a result, the seat area St can be minimized as described above. The floor of the cabin 16 is defined along the seat area St, which achieves reduction in the size of the cabin 16 and therefore reduction in the size and the weight of the airframe. Reduction in the size and the weight of the airframe enables the VTOL aircraft to move up and cruise with small motors.

In addition, an enough foot space Sa is also secured in each individual space Sp, which allows low-stress interior comfort for passengers M. As a result of arranging the individual spaces Sp in a line in front-back direction and arranging adjacent seats 64 to be diagonally opposite each other, the positions of shoulders of adjacent passengers M are separated from each other, which reduces the feeling of pressure of the passengers M. In other words, it is possible to minimize the size of the individual spaces Sp and provide adequate spaces to adjacent passengers M. Thus, according to the embodiment, both reduction in the weight of the airframe and the interior comfort for passengers can be achieved.

Furthermore, as a result of providing the partitions 68 between individual spaces Sp adjacent to each other in the front-back direction, it is possible to protect minimal privacy of passengers M and reduce stress caused by unnecessary face-to-face situations. In addition, by arranging the windows 22 in front of the seats 64, the relaxing effect can be increase by a change of scenery.

In addition, as a result of arranging the door 66 in the back wall around which protrusions, recesses, and gaps are relatively present and which is less affected by aerodynamic influence in the fuselage 2, an increase in the resistance against the fuselage 2 can be suppressed. Because the door 66 is arranged in the back wall, passengers M get into the cabin 16 from the back of the cabin 16. In this regard, because a structure in which a necessary passage width is provided in the arrangement of the seats 64 is used, the passengers M can smoothly get in.

Because the flight vehicle of the embodiment is a VTOL aircraft, the VTOL aircraft goes up to a sufficient altitude in the VTOL state during takeoff, and then switches to the cruising state at the altitude. Thus, it is relatively unlikely that the VTOL aircraft rapidly accelerates forward to gain lift during takeoff and that a large G-force acts on passengers M in the forward/backward direction like an airplane. It is therefore possible to prevent or reduce excessive physical load on the passengers M during propulsion of the VTOL aircraft even in the case of application to the VTOL aircraft as in the embodiment.

### [Modifications]

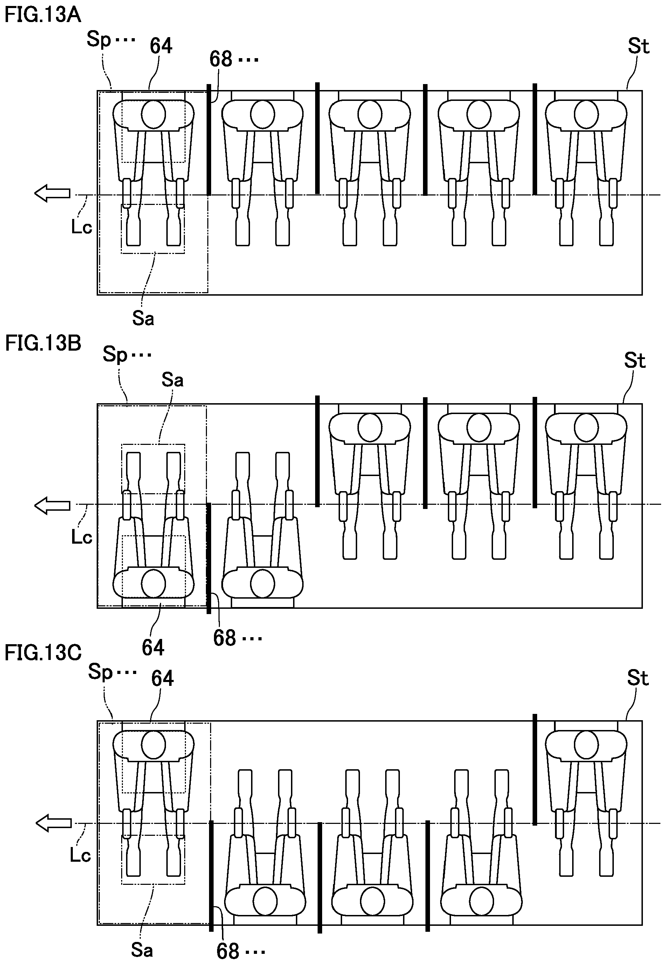

FIGS. 13A to 13C illustrate seat arrangements according to modifications. FIG. 13A illustrates a first modification, FIG. 13B illustrates a second modification, and FIG. 13C illustrates a third modification.

In any of the first to third modifications, a plurality of individual spaces Sp are arranged in a line from the front to the back of the cabin 16 in a manner similar to the embodiment.

In the first modification, however, all the seats 64 are oriented in one direction along the width direction of the airframe (FIG. 13A). In the second modification, some seats at the front in the seat area St are oriented in one direction along the width direction of the airframe, and the other seats at the back are oriented in the other direction along the width direction (FIG. 13B). In the third modification, one seat at the front and one seat at the back are oriented in one direction along the width direction of the airframe, and the other seats in the middle are oriented in the other direction along the width direction (FIG. 13C).

In all of these modifications, in a manner similar to the embodiment, the floor of the cabin 16 is defined along the seat area St, which achieves reduction in the size of the cabin 16 and therefore reduction in the size and the weight of the airframe. The interior comfort, however, may be lower than that in the embodiment in that an area where seats 64 adjacent to each other in the front-back direction are not diagonally opposite (an area in which passengers M sit shoulder-to-shoulder with each other) is included. In addition, as the cabin 16 is smaller, the weight of the airframe is more likely to be reduced but, conversely, the influence of body weights of passengers M on the balance of the airframe becomes relatively larger. Thus, in the case of arrangements in which passengers M are on one side in the width direction of the airframe as in the first modification, control for balancing may additionally be needed. From this perspective, it can be said that the embodiment is more preferable.

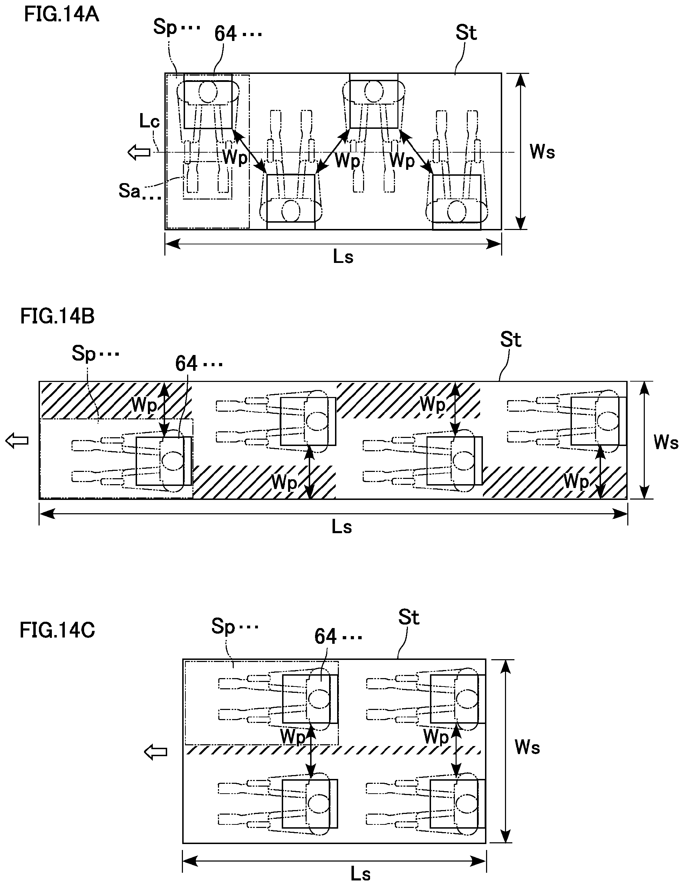

FIGS. 14A to 14C illustrate seat arrangements according to other modifications. FIG. 14A illustrates a fourth modification. FIG. 14B illustrates a third comparative example, and FIG. 14C illustrates a fourth comparative example.
In the fourth modification, the number of seats 64 is four, which is smaller by one than that in the embodiment (FIG. 14A). Although the number of seats is different, the technical idea is similar to that in the embodiment. In other words, a plurality of seats 64 are arranged one by one next to each other along the front-back direction of the airframe, and each of the seats 64 is shifted from the center Lc of the airframe widthwise and is oriented in the width direction of the airframe. In addition, the individual spaces Sp are arranged in such a manner that adjacent seats 64 are diagonally opposite each other.

Here, the area of the seat area St in each of the fourth modification and the comparative examples is calculated. Note that, for comparison between these areas, the passage width Wp in the cabin is assumed to be the same in all of the fourth modification and the comparative examples in a manner similar to the embodiment.

As a result, calculation results shown in Table 5 are obtained.

**[Table 5]**

| SEAT ARRANGEMENT (4 PERSONS) | SEAT AREA LENGTH Ls [m] | SEAT AREA WIDTH Ws [m] | AREA [m²] | AREA DIFFERENCE [m²] |
|---|---|---|---|---|
| FIRST MODIFICATION | 3.00 | 1.40 | 4.20 | - |
| THIRD COMPARATIVE | 5.58 | 1.12 | 6.25 | +2.05 |
| EXAMPLE | | | | |
| FOURTH COMPARATIVE EXAMPLE | 2.82 | 1.71 | 4.82 | +0.62 |

As described above, the individual spaces Sp are assumed to be set so that the length Ls of the seat area St is Ls = 3.00 m and the width Ws is Ws = 1.40 m in the fourth modification. Then, according to the calculation results in Table 5, the seat area St has an area larger by 2.05 m2 in the third comparative example than in the embodiment, and an area larger by 0.62 m2 in the fourth comparative example than in the fourth modification. Thus, the advantage of seat arrangement of the fourth modification in terms of reduction in the size of the cabin 16 can be seen.

Note that, as a result of setting the total number of seats to an even number, the numbers of seats on the left and on the right can be made equal. In terms of easiness of keeping balance, the fourth embodiment can be more advantageous than the embodiment.

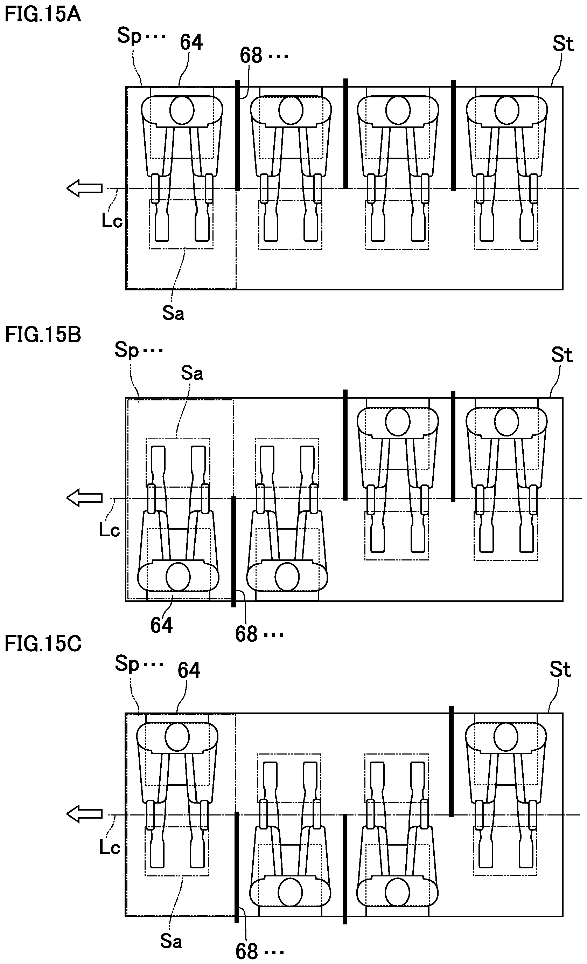

FIGS. 15A to 15C illustrate seat arrangements according to still other modifications. FIG. 15A illustrates a fifth modification, FIG. 15B illustrates a sixth modification, and FIG. 15C illustrates a seventh modification.
In any of the fifth to seventh modifications, a plurality of individual spaces Sp are arranged in a line from the front to the back of the cabin 16 in a manner similar to the embodiment.

In the fifth modification, however, all the seats 64 are oriented in one direction along the width direction of the airframe (FIG. 15A). In the sixth modification, two seats at the front in the seat area St are oriented in one direction along the width direction of the airframe, and the other two seats at the back are oriented in the other direction along the width direction (FIG. 15B). In the seventh modification, the first seat at the front and the rearmost seat at the back are oriented in one direction along the width direction of the airframe, and the remaining two seats in the middle are oriented in the other direction along the width direction (FIG. 15C) .

In all of these modifications, in a manner similar to the fourth modification, reduction in the size of the cabin 16 and therefore reduction in the size and the weight of the airframe are achieved. In the sixth and seventh modifications, in a manner similar to the fourth modification, the numbers of seats on the left and on the right are equal, which is preferable in terms of the easiness of keeping balance. In terms of interior comfort, however, the fourth modification in which adjacent seats 64 are diagonally opposite each other is more preferable.

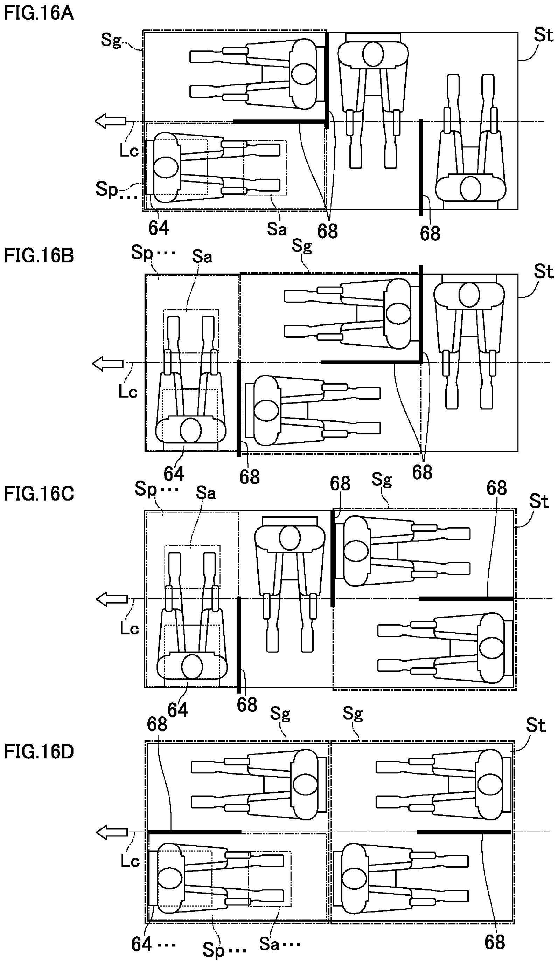

FIGS. 16A to 16D illustrate seat arrangements according to still other modifications. FIG. 16A illustrates an eighth modification, FIG. 16B illustrates a ninth modification, FIG. 16C illustrates a tenth modification, and FIG. 16D illustrates an eleventh modification. In all of these modifications, the number seats is the same as that in the fourth modification, but these modifications are different from the fourth modification in that two seats next to each other in the width direction and oriented in the front-back direction of the airframe are included. For convenience of explanation, a seat space in which two seats next to each other in the width direction and oriented in the front-back direction are arranged will be referred to as a "special seat space Sg".

In the special seat space Sg, two individual spaces Sp are adjacent to each other in the width direction of the airframe, and thus two seats 64 next to each other in the width direction and oriented in the front-back direction are included. The two seats 64 next to each other are diagonally opposite each other, that is, one of the seats 64 is arranged to face forward and the other is arranged to face backward.

In the eighth modification, the seat arrangement is such that the two seats at the front in the fourth modification (FIG. 14A) are turned 90 degrees. Specifically, a special seat space Sg is arranged at the front in the seat area St, and two specific seats are arranged in the front-back direction at the back. A "specific seat" used herein means a seat 64 that is arranged in a position shifted from the center Lc widthwise and oriented in the width direction of the airframe.

In the ninth modification, the seat arrangement is such that the two middle seats in the fourth modification are turned 90 degrees. Specifically, a special seat space Sg is arranged at the center of the seat area St, and a plurality of specific seats are arranged at the front and at the back. In the tenth modification, the seat arrangement is such that the two seats at the back in the fourth modification are turned 90 degrees. Specifically, a special seat space Sg is arranged at the back in the seat area St, and two specific seats are arranged in the front-back direction at the front.

In the eleventh modification, the seat arrangement is such that the two seats at the front and the two seats at the back in the fourth modification are turned 90 degrees. Specifically, special seat spaces Sg are arranged at the front and at the back in the seat area St.

In all of these modifications, the floor of the cabin 16 is defined along the seat area St, which achieves reduction in the size of the cabin 16 and therefore reduction in the size and the weight of the airframe. In addition, an individual space Sp is secured for each seat 64, and seats arranged next to each other are diagonally opposite each other, which achieves good interior comfort.

Note that, in relation to the eighth to tenth modifications, a technical idea as follows can be extracted.

### [Supplementary Note 1]

One or more specific seats are arranged on at least one of the front side or the back side of a special seat space. The specific seats are arranged in positions shifted from the center of the airframe widthwise and oriented in the width direction of the airframe.

### [Supplementary Note 2]

The special seat space has a substantially rectangular shape in planar view. Note that the substantially rectangular shape need not be an exact rectangular, and may have rounded corners or the like (the same is applicable below).

In relation to the embodiment and the modifications, a technical idea as follows can be extracted.

### [Supplementary Note 3]

A seat area containing all seats has a substantially rectangular shape in planar view. The inner wall faces of the cabin have a shape complementary to the shape of the seat area in planar view. Note that the "complementary" shape includes a shape of the inner wall faces that closely surrounds the seat area.

The present invention is not limited to the embodiments and modifications described above, and any component thereof can be modified and embodied without departing from the scope of the invention. Components described in the embodiments and modifications can be combined as appropriate to form various embodiments. Some components may be omitted from the components presented in the embodiments and modifications.

Although not mentioned in the embodiment, each seat may be provided with a legrest. The legrest may have a structure that can be folded toward or housed under the bearing surface. In any case, the cabin includes floor surfaces each corresponding to a foot space on a side opposite the side toward which the seat is shifted from the center of the airframe widthwise.

In the embodiment described above, an example of an automatically operated aircraft (automatically controlled aircraft) with no pilot on board has been presented as the VTOL aircraft 1. In a modification, the VTOL aircraft 1 may be a flight vehicle that a pilot can get on. A cockpit may be provided at a front part of the cabin 16 inside the fuselage 2. The VTOL aircraft 1 may be both operable by a pilot and automatically operable.

In the embodiment described above, an example of a structure in which a pair of left and right front rotors and a pair of left and right rear rotors are provided on the airframe has been presented. In a modification, two or more pairs of left and right front rotors and two or more pairs of left and right rear rotors may be provided.

In the embodiment described above, an example of fixed wheels 8 having leg parts that are always exposed downward from the fuselage 2 has been presented. In a modification, a wheel storing mechanism capable of storing wheels in the fuselage may be provided.

In the embodiment described above, an example of a structure in which the main wings 4 are provided on a lower part the fuselage 2 has been presented. In a modification, the main wings may be provided on an upper part of the fuselage. In addition, while the main wings 4 are swept-back wings in the embodiment described above, the main wings 4 may have other shapes such as elliptic wings, rectangular wings, and tapered wings.

In the embodiment described above, as illustrated in FIGS. 5A, 5B and 6, an example of a configuration in which a second motor 36 and a motor drive circuit 60 are included in each rotor unit 30 has been presented. In a modification, a second motor 36 may be included in each rod 24. In addition, a motor drive circuit 60 may be included in each rod 24.

In the embodiment described above, an example in which the front rotors 10 are arranged on a front and upper part of the airframe and the rear rotors 12 are arranged on a rear and lower part of the airframe has been presented. In a modification, the positions of at least either of the front rotors and the rear rotors on the airframe may be changed. For example, the front rotors may be arranged on a front and lower part of the airframe and the rear rotors may be arranged on a rear and upper part of the airframe.

While examples of eVTOL aircrafts as the flight vehicle have been presented in the embodiment and modifications described above, the flight vehicle may be a VTOL aircraft with an internal combustion engine. The seat arrangements may be applied to flight vehicles other than VTOL aircraft. In these cases, the front rotors and the rear rotors may each turn about a horizontal axis, a vertical axis, an inclined axis, or others.

## Claims

1. A flight vehicle comprising:
a cabin in an airframe; and
a plurality of seats arranged in the cabin one-by-one in a row along a front-back direction of the airframe, wherein
the seats are each arranged in a position shifted from a center of the airframe widthwise and are oriented in a width direction of the airframe.

2. The flight vehicle according to claim 1, wherein the seats are each arranged so that a back thereof is adjacent to one of inner wall faces, the inner wall faces facing each other in the width direction of the airframe.

3. The flight vehicle according to claim 1 or 2, wherein the seats are alternately arranged in positions shifted from the center of the airframe widthwise from a front to a back of the airframe.

4. The flight vehicle according to any one of claims 1 to 3, wherein the cabin includes floor surfaces each corresponding to a foot space for a passenger, each of the floor surfaces being on a side opposite a side toward which a corresponding one of the seats is shifted from the center of the airframe widthwise.

5. The flight vehicle according to any one of claims 1 to 4, further comprising:
a partition between seats adjacent to each other in the front-back direction of the airframe.

6. The flight vehicle according to any one of claims 1 to 5, wherein windows are arranged in a wall of the airframe at positions in front of the respective seats.

7. The flight vehicle according to any one of claims 1 to 6, comprising:
main wings at a lower part of the airframe.

8. The flight vehicle according to any one of claims 1 to 7, wherein a door is provided in a wall at the back of the cabin in the airframe.

9. The flight vehicle according to claim 8, further comprising:
a rear rod extending in a lateral direction beneath the door at the airframe.

10. The flight vehicle according to claim 9, further comprising:
left and right rotors on the rear rod.

11. The flight vehicle according to any one of claims 1 to 10, further comprising:
a front rod extending in a lateral direction on a front and upper part of the airframe.

12. The flight vehicle according to claim 11, further comprising:
left and right rotors on the front rod.

13. The flight vehicle according to any one of claims 1 to 12, wherein the flight vehicle is a vertical take-off and landing aircraft.

14. A flight vehicle being a vertical take-off and landing aircraft, comprising:
a cabin including a seat space containing two seats oriented in a front-back direction of an airframe, wherein
one of the two seats next to each other in a width direction of the airframe is oriented forward and the other of the two seats is oriented backward.
